(19) **Europäisches Patentamt / European Patent Office / Office européen des brevets**

(11) **EP 4 566 944 A1**

(12) **EUROPEAN PATENT APPLICATION**

(43) Date of publication:
**11.06.2025 Bulletin 2025/24**

(21) Application number: **23275170.1**

(22) Date of filing: **06.12.2023**

(51) International Patent Classification (IPC):
**B64C 15/00** $^{(2006.01)}$    **G05D 1/00** $^{(2024.01)}$
**B64C 13/00** $^{(2006.01)}$    **G01C 23/00** $^{(2006.01)}$
**G08G 5/00** $^{(2025.01)}$

(52) Cooperative Patent Classification (CPC):
**B64C 13/16; G05D 1/49; G05D 1/644;**
B64U 2201/00; G05D 2105/35; G05D 2109/22;
G08G 5/21

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **BAE SYSTEMS plc**
**London SW1Y 5AD (GB)**

(72) Inventor: **The designation of the inventor has not yet been filed**

(74) Representative: **BAE SYSTEMS plc**
**Group IP Department**
**Warwick House**
**P.O. Box 87**
**Farnborough Aerospace Centre**
**Farnborough Hampshire GU14 6YU (GB)**

(54) **CONTROL SYSTEM**

(57) There is herein disclosed a method for controlling a system. The method comprises obtaining a set of parameters for the system. The set of parameters comprise at least a first parameter, a second parameter and a third parameter and the set of parameters relate to features of the system suitable for controlling. The method further comprises performing a first optimisation procedure using the first parameter and second parameter to determine an optimised first parameter and optimised second parameter. The first optimisation procedure comprises defining a first control contraction metric (CCM) for the system. The method further comprises performing a second optimisation procedure using the first parameter, second parameter and third parameter, to determine an optimised third parameter. The second optimisation procedure comprises defining a second CCM metric for the system. The method further comprises combining the optimised first parameter, optimised second parameter and optimised third parameter to produce a final solution for controlling the system.

100

START

↓

**102**
OBTAIN SET OF PARAMETERS

↓

**104**
PERFORM FIRST OPTIMISATION PROCEDURE

↓

**106**
PERFORM SECOND OPTIMISATION PROCEDURE

↓

**108**
PRODUCE FINAL SOLUTION FOR CONTROLLING A SYSTEM

↓

END

**Figure 1**

## Description

FIELD

The present invention relates to a method for controlling a system, for example, a flight control system.

BACKGROUND

The disclosure herein relates to a method for controlling a system, for example, an aircraft system.

Adaptive control systems are used enhance safety, efficiency, and performance of systems. An example of an adaptive control system is an aircraft flight system. Progress in data-driven learning, speed of computation and a desire to reduce the costs of testing and servicing of aircraft have increased the amount of research in the field. The disclosure herein relates to static Control Contraction Metrics (CCMs) within a Linear Matrix Inequality (LMI) framework. LMIs are known for their uncertainty handling capabilities and a convex formulation of a safety certificate offers a flexible framework for approximating functions.

CCMs are a mathematical framework proposed in the publication I. R. Manchester and J.-J. E. Slotine "Control contraction metrics, robust control and observer duality" (2014) and have gained attention recently for nonlinear control problems for various applications, including robotics and UAV control. The key idea behind CCMs is to leverage linear analysis tools to certify contraction in a generalised co-ordinate space by using set invariance tools like convex optimisation and then to solve a less computationally expensive control synthesis problem.

SUMMARY

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described a method for controlling a system. The method comprises obtaining a set of parameters for the system. The set of parameters comprise at least a first parameter, a second parameter and a third parameter and the set of parameters relate to features of the system suitable for controlling. The method further comprises performing a first optimisation procedure using the first parameter and second parameter to determine an optimised first parameter and optimised second parameter. The first optimisation procedure comprises defining a first control contraction metric (CCM) for the system. The method further comprises performing a second optimisation procedure using the first parameter, second parameter and third parameter, to determine an optimised third parameter. The second optimisation procedure comprises defining a second CCM metric for the system. The method further comprises combining the optimised first parameter, optimised second parameter and optimised third parameter to produce a final solution for controlling the system.

In some embodiments, the method further may comprise controlling the system based on the final solution for controlling the system.

In some embodiments, the first CMM may comprise an estimated contraction rate of the system.

In some embodiments, performing the first optimisation procedure may comprise defining an algorithm for performing the first optimisation procedure, inputting the first CCM, the first parameter and the second parameter into the algorithm and outputting, from the algorithm, the optimised first parameter and the optimised second parameter.

In some embodiments, the second CMM may comprise a dual metric, W.

In some embodiments, performing the second optimisation procedure may comprise optimising the first parameter, the second parameter and the third parameter to find a solution for a contraction rate at least a minimum distance to the estimated contraction rate.

In some embodiments, the method may comprise a method of flying quality control for a controller of an aircraft.

In some embodiments, the aircraft may comprise an unmanned ariel vehicle, UAV.

In some embodiments, the aircraft comprises a fighter jet.

In some embodiments, the first parameter or second parameter may comprise an angle of attack, $\alpha$, of the aircraft. The angle of attack $\alpha$ represents an angle of the body the aircraft relative to a wind axis.

In some embodiments, the first parameter or second parameter may comprise a pitch rate, q, of the aircraft. The pitch rate q represents a rate of change of a pitch attitude $\theta$ of the aircraft.

In some embodiments, the third parameter may comprise a pitch attitude $\theta$ of the aircraft. The pitch attitude $\theta$ represents a pitch of the aircraft relative to a ground level.

In some embodiments, the estimated contraction rate of the system may be based on a second order flying quality.

According to a second aspect, there is described a flight controller, comprising means for controlling a controlling.

The flight controller comprises means for obtaining a set of parameters for the system. The set of parameters comprise at least a first parameter, a second parameter and a third parameter and the set of parameters relate to features of the system suitable for controlling. The flight controller further comprises means for performing a first optimisation procedure using the first parameter and second parameter to determine an optimised first parameter and optimised second parameter. The first optimisation procedure comprises defining a first control contraction metric (CCM) for the system. The flight controller further comprises means for performing a second optimisation procedure using the first parameter, second parameter and third parameter, to determine an optimised third parameter. The second optimisation procedure comprises defining a second CCM metric for the system. The flight controller further comprises means for combining the optimised first parameter, optimised second parameter and optimised third parameter to produce a final solution for controlling the system.

In some embodiments, the means comprise: at least one processor; and at least one memory storing instructions that, when executed by the at least one processor, cause the performance of the apparatus.

According to a third aspect, there is described a computer program comprising computer readable instructions which when executed by a computer are arranged to implement a method for controlling a system. The method comprises obtaining a set of parameters for the system. The set of parameters comprise at least a first parameter, a second parameter and a third parameter and the set of parameters relate to features of the system suitable for controlling. The method further comprises performing a first optimisation procedure using the first parameter and second parameter to determine an optimised first parameter and optimised second parameter. The first optimisation procedure comprises defining a first control contraction metric (CCM) for the system. The method further comprises performing a second optimisation procedure using the first parameter, second parameter and third parameter, to determine an optimised third parameter. The second optimisation procedure comprises defining a second CCM metric for the system. The method further comprises combining the optimised first parameter, optimised second parameter and optimised third parameter to produce a final solution for controlling the system.

BRIEF DESCRIPTION OF THE FIGURES

Embodiments of the invention will now be described by way of example only with reference to the figures, in which:

Figure 1 shows, by way of example, a flowchart of a method.
Figure 2 shows, by way of example, an aircraft.
Figure 3 shows, by way of example, the aircraft of Figure 3 showing various parameters.
Figure 4 shows, by way of example, a pair of trajectories.
Figure 5 shows, by way of example, a double loop system.
Figure 6 shows, by way of example, a flowchart of a method for a first optimisation procedure.
Figure 7 shows, by way of example, a flowchart of a method for a second optimisation procedure.
Figure 8 shows, way of example, a matrix based mathematical method for first loop optimisation and second loop optimisation.
Figure 9 shows, by way of example, an apparatus suitable for performing the methods disclosed herein.

DETAILED DESCRIPTION

The use of CCMs for control systems is focused on nonlinear control theory and there is currently a gap between linear and nonlinear design for control systems. The nonlinear CCM approaches bound the upper and lower eigenvalues of the metric to define the closed loop performance of the resulting system. For nonlinear systems a robustness tube is typically adopted because the dynamics are inherently more complex. It is also desirable to find weighting matrices that meet eigenstructure requirements for LTI design specifications based on second order dynamics. For aerospace applications there are also LTI based performance specifications such as the military standards for flying qualities. In order to leverage new control synthesis approaches such as CCMs an understanding how these two approaches can work together is desirable for real world application. Current convex optimization techniques adopted for the optimisation of CCMs bound the upper and lower eigenvalues of a metric and lack an explicit design of the placement of poles specifically in reference to second-order reference models and the analysis of LTI theory. Further there is often a trade-off between robustness and performance defined by the use of different control synthesis approaches that are certified via formal methods. The adoption or trade-off of these formal methods to certify a mixed performance is often not possible due to non-convex solution spaces.

The disclosure herein aims to address the application of the CCM technique and convex optimisation and provides a framework and technology applicable, for example, within the aerospace industry. The framework disclosed herein is a 'double loop' optimisation procedure made up of a first loop known as the first optimisation procedure and a second loop known as the second optimisation procedure.

Furthermore, the disclosure herein relates to the use of CCMs in higher dimensions and addresses the challenges in creating a robust controller subject to deviations and faults in the nonlinear aircraft dynamics approximated as a linear estimate for the short period mode. The proposed disclosure provides a computationally efficient for controlling a system compared to previously known techniques.

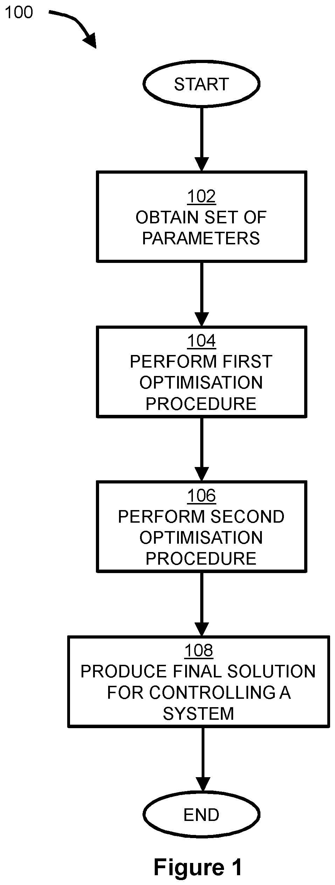

Figure 1 shows, by way of example, a flowchart of a method according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 100 comprises a first operation 102 of obtaining a set of parameters for the system. The set of parameters comprising at least a first parameter, a second parameter and a third parameter. The set of parameters relate to features of the system suitable for controlling. For example, if the system is an aircraft or aircraft flight controller, the parameters may relate to variables of flight control that a pilot or computing system may varying to affect the flight path of the aircraft.

The method comprises a second operation 104 of performing a first optimisation procedure using the first parameter and second parameter to determine an optimised first parameter and optimised second parameter. The first optimisation procedure comprises defining a first control contraction metric (CCM) for the system. A first CCM may relate to one or more features of the control contraction method discussed herein. A first CCM may relate feature or parameter used in the first optimisation procedure, such as a parameter or metric that may be fixed in an algorithm representing the first optimisation procedure.

The method comprises a third operation 106 of performing a second optimisation procedure using the first parameter, second parameter and third parameter, to determine an optimised third parameter. The second optimisation procedure comprises defining a second CCM metric for the system. A second CCM may relate to one or more features of the control contraction method discussed herein. A second CCM may relate feature or parameter used in the second optimisation procedure, such as a parameter or metric that may be fixed in an algorithm representing the second optimisation procedure.

The method comprises a fourth operation 108 of combining the optimised first parameter, optimised second parameter and optimised third parameter to produce a final solution for controlling the system. The production of the final solution for controlling the system, comprises taking the first optimised parameter and second optimised parameter determined in the first optimisation procedure, alongside taking the third optimised parameter defined in the second optimisation procedure. As such a solution for controlling the system is determined by using the double loop approach by first defining the first and second optimised parameters, and subsequently defining the third optimised parameter. This procedure provides a more computationally efficient method for controlling a system, since the first and second parameters can be optimised first without the need to consider the third parameter and subsequently the third parameter can be independently optimised.

The 'optimised' first, second and third parameters, refers to values for the first, second and third parameters respectively that have been modified to best adhere to the requirements of the system. For example, in the instance of an error or fault in an aircraft the optimised parameters reflect values for the parameters that best counteract the error or fault. As such, an appropriate flight condition can be maintained.

In some embodiments, the method 100 may optionally further comprise controlling the system based on the final solution for controlling the system.

The disclosure herein presents a framework for system control optimization using CCMs. For example, the disclosure provides an aircraft controller using convex optimisation and an approximation of the aircraft dynamics from trajectory data. CCMs are used in higher dimensions and the challenges in creating a robust controller subject to deviations and faults in the nonlinear aircraft dynamics approximated as a linear estimate for the short period mode. The proposed method provides an approach for monitoring damaged aircraft to show how the performance of the aircraft can be improved without the need for recovery or control allocation techniques whilst also working within defined flying quality parameters that must be met. The approach herein aims to provide a methodology that can be tailored to fighter jets as well as other fixed wing aircraft.

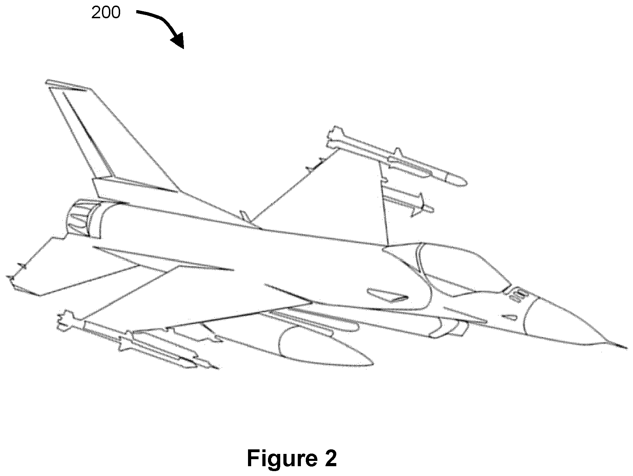

Purely for demonstrative purposes, an example system is discussed with regards to an aircraft system for flight control, although, the proposed disclosure may apply to many control systems in the field of mechanical, automotive, aerospace and structural engineering. Figure 2 shows an F-16 aircraft 200. The F-16 aircraft 200 is a highly manoeuvrable aircraft and thus can be characterised by a highly nonlinear dynamic system in general over the full flight envelope. In order to have high manoeuvrability the centre of pressure is forward of the centre of gravity so that the horizontal stabiliser corrects for pitch up rotation by a positive lift command at the tail. Because of the inherent instability with the onset of increased angle of attack the aircraft requires a flight control system that automatically corrects an offset with a feedback controller to reduce the pilot workload and maintain the aircraft within safe operating and handling limits. The feedback gains therefore determine a trade-off between an augmented closed loop stability and the manoeuvrability of the aircraft. The trade-off is determined by an acceptable pilot workload, expected perturbations, and the design responsiveness of the airframe. The aircraft also utilises several actuators to maintain controlled flight including leading edge flaps for flow control, ailerons, symmetric split rear stabilisers, a rudder, speed-brakes and a thrust vectoring single engine.

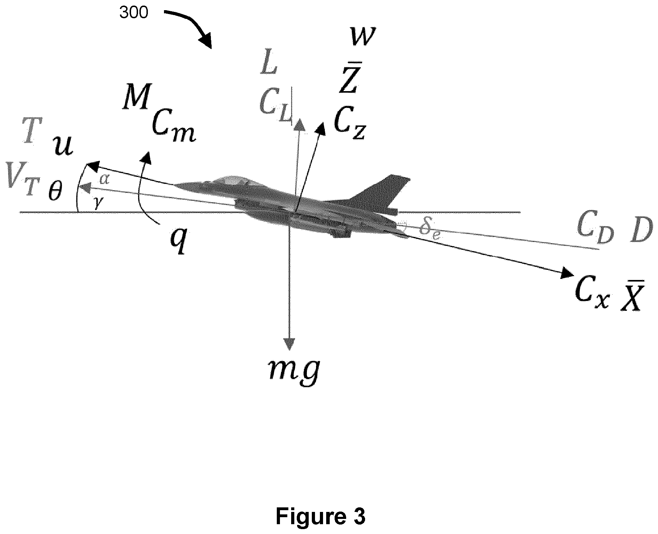

Figure 3 shows an aircraft 300 such as the aircraft 200 of Figure 2 and describes the longitudinal axis, forces, moments, and velocity vectors. The thrust $T$ and elevator angle $\delta h$ are control inputs and are shown. The aircraft motion is described by the body axis velocities in the axial direction $u$ and in the normal direction $w$ with the total velocity vector in the wind axis $V_T$. The weight of the aircraft $mg$ acts at a pitch attitude angle $\theta$ towards the center of the Earth. The angle of attack $\alpha$ gives the body angle relative to the wind axis and the glide slope $\gamma$ is the angle of motion of the aircraft relative to the Earth's horizontal axis. The pitch rate $q$ and pitching moment $M$ act positive nose up. The aerodynamic forces are the lift $L$ and drag $D$ in the wind axis and the $\overline{Z}$ body normal force and axial force $\overline{X}$ with the coefficients terms, $C_m$, $C_z$, $C_L$, $C_x$ respectively.

The method 100 of Figure 1 may be a method of flying quality for a controller of an aircraft. Optionally, the aircraft may be aircraft such as the F-16 aircraft 200 shown in Figure 2. Alternatively, the aircraft may be any other kind of example, such as, but not limited too the following examples: a commercial passenger or cargo aircraft or any kind of military aircraft. Optionally, the aircraft may be an unmanned ariel vehicle. The unmanned ariel vehicle may be controlled remotely.

When the method 100 is a method of flying quality control for an aircraft, the parameters referred to in the method may be parameters of the aircraft such as the parameters discussed in relation to Figure 3. As such, the first parameter or second parameter comprise one of the following: an angle of attack, $\alpha$, of the aircraft or a pitch rate, $q$. For example, the first parameter may be the pitch rate, $q$, and the second parameter may be the an angle of attack, $\alpha$, of the aircraft. Alternatively, the second parameter may be the pitch rate, $q$, and the first parameter may be the an angle of attack, $\alpha$, of the aircraft. In such a scenario, the angle of attack $\alpha$ represents an angle of the body the aircraft relative to a wind axis and pitch rate q represents a rate of change of a pitch attitude $\theta$ of the aircraft. By way of example, the third parameter may comprise a pitch attitude $\theta$ of the aircraft. In such a scenario the pitch attitude $\theta$ represents a pitch of the aircraft relative to a ground level. Alternative, the third parameter could represent an alternative parameter of the aircraft, such as the pitching moment, the glide slope $\gamma$ or the roll or yaw of the aircraft. It is noted that the roll and yaw are not shown in Figure 3.

The Control Contraction Metric (CCM) Technique

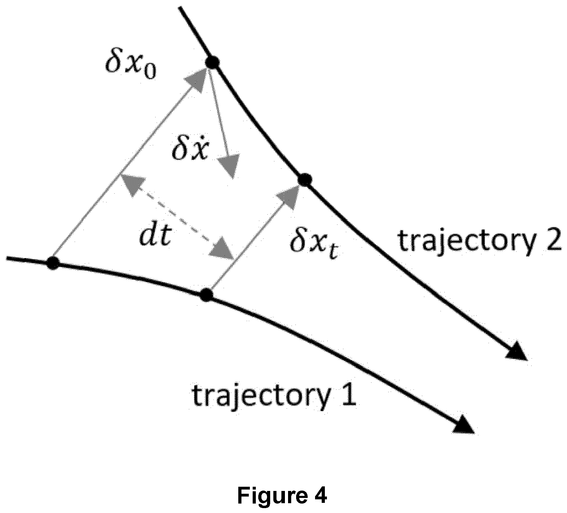

In contraction theory, the evolution of an initial virtual displacement, $\delta_{x0}$, of a pair of flow lines or trajectories, Figure 4, is certified to be contracting exponentially by analysing the negative definiteness of the Jacobian of the system by way of a metric tensor $M(x, t)$. If a metric is found for the system then the system is provably incrementally stable by the contraction of all pairwise trajectories. The theory has been developed into a Control Contraction Metric (CCM) for control affine systems where a differential control input is added as in Equation 1 below:

$$\delta \dot{x} \ = A(x, u, t) \delta x + B(x, t) \delta u \qquad (1)$$

Furthermore, the control contraction metric CCM defines a dual metric $W(x) = M(x)^{-1}$ and with a contraction rate $\lambda$. The solution to the can be found from the alternative form using the dual metric and a scalar valued gain function $\rho(x)$ as a Linear Matrix Inequality (LMI). A dual metric takes on the usual meaning in accordance with dual space mathematics. The LMI is an infinite dimensional problem and can be made finite-dimensional by a suitable approximating function, enforcing constraints by gridding over a region of the state space or as a sum-of-squares optimisation problem.

There have been many recent works in control contraction metrics for aerospace applications in research, such as publication I. R. Manchester and J.-J. E. Slotine "Control contraction metrics, robust control and observer duality" (2014). Robust techniques for control systems are limited in predicting flying qualities for aircraft. The use of CCMs has been explored previously but the focus is on their application to nonlinear control problems. The disclosure herein presents a practical implementation of CCMs with the aim to bridge the gap between the nonlinear theory and the certification of linear controllers. The proposed method focuses on the synthesis of a controller that meets desired flying qualities and robustness constraints in the context of LTI systems.

Using control contraction metrics or Lyapunov approaches for certifying controllers typically use linear matrix inequalities to place bounds on the upper and lower Eigenvalues of a Metric, a positive definite symmetric matrix that defines a measure of the systems directional dynamics under which a decay rate is certified as contracting. The limitation of this approach currently is that the optimization focuses on upper bounds or worst-case bounds on the limiting case or state that is being certified in the representation of the dynamics model. A workaround to optimize for all states is to use weighting functions as in LQR control but these require tuning and do not directly address the desired dynamics as a design goal. There is a need therefore to use the benefits of convex optimization for flexibility and robust design of feedback controllers whilst also optimizing for desired transient performance in all dimensions.

The disclosure herein may, for example, use a contraction rate as a reference model under which a search for a Metric and contraction rate is found that matches the reference model. Instead of placing bounds on all dimensions in the system in the optimization the technique fixes an 'inner' or 'first' loop gains before performing a search for a controller to certify an 'outer' or 'second' loops performance. In this way the flying qualities for a flight controller can be optimized rather than just trying to place poles or reduce a cost function. It is though that the approach will also be beneficial for informing the success or performance of nonlinear techniques that the control contraction approach is also suitable for in generating bounded tracking controllers.

Double-loop optimisation

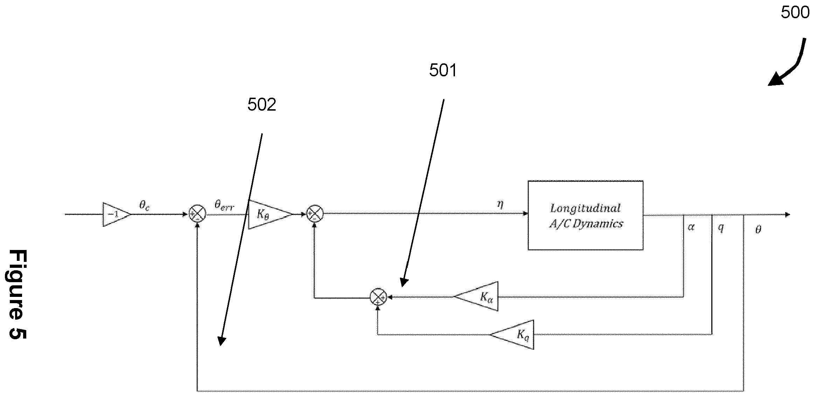

Figure 5 shows a two-loop proportional feedback controller 500. The disclosure herein is applicable to any control problem in higher dimensions or with a higher number of loops. The first loop 501 represents the first optimisation procedure of method 100. The second loop 502 represents the second optimisation procedure of method 100.

The controller 500 is composed of a first loop 501 (inner loop) full state feedback in angle of attack and pitch rate with feedback gains in the feedback loop as in a regulator control structure. The second loop 502 (outer loop) is negative feedback to control the pitch angle of the aircraft for a short period mode. Since the feedback in the outer loop is in the forward loop and the $\theta$ state is the integral of the pitch rate it ensures that the closed loop controller in pitch rate has a steady state error of zero. The three gain terms arbitrarily decide the closed loop poles for the system and so is fully controllable and stabilisable.

In this section, we briefly outline the control contraction method to define a stability certificate for a linear time-invariant system with dynamics described by:

$$\dot{x} = Ax + Bu \tag{2}$$

where $A$ is an $n \times n$ matrix, $B$ is an $n \times m$ matrix, and $x$ is a vector of states ($x \in \mathrm{R}^n$) $u$ is a vector of control input ($u \in \mathrm{R}^m$). Full state feedback with a control input including nominal inputs such as a pilot stick input or disturbances is given as:

$$u = v - K\delta x \tag{3}$$

$$\dot{x} = Ax + B(v - K\delta x) = (A - BK)\delta x + Bv \tag{4}$$

In the modified control input, $u = v - K\delta x$, where $v$ is an exogenous input. The CCM method incorporates trajectory differentials to define the feedback inputs $\delta x = (x^* - x)$ where $x^*$ is a reference trajectory. The CCM technique was developed by Manchester and Slotine for nonlinear systems to certify contraction of pairwise trajectories for a system by searching for metric and contraction rate that validates an LMI similar to the established Control Lyapunov Functions (CLFs). The disclosure herein considers the use of such a metric for LTI dynamics as a first approximation with the view that the architecture and techniques may be extended to nonlinear dynamics for which CCMs are most attractive.

The search for a static metric for linear dynamics in the CCM technique reduces to an LMI that can be solved as a semi-definite programme to obtain the coefficients of the Matrix $W$ satisfying:

$$\min \quad -trace(W) \tag{5}$$

$$s.t. \quad W \geq 0 \tag{6}$$

$$W + WA^T - BB^T \leq -2\lambda W \tag{7}$$

where $A$ is the systems linear dynamics and $B$ is the control effectiveness matrix. The optimisation involves searching for a dual-metric $W = M^{-1}$, a positive definite symmetric matrix, scaled by a positive coefficient lambda that signifies the rate of contraction, where the metric $W$ measures the negative definite properties of the closed loop dynamics. If the closed loop dynamics in the metric are negative definite by more than $2\lambda W$ then the system is said to be exponentially stable with a

contraction rate of $\lambda$ in the metric.

In the CCM formulation where a static metric is found for a given contraction rate $\lambda$, the control input is of the form in Equation 8 a differential feedback controller with static gain matrix $K$.

$$u(t) = -\frac{1}{2} B^T W^{-1} \delta x(t) = -K \delta x(t) \qquad (8)$$

The first CCM metric may comprise an estimated contraction rate of the system. The estimated contraction rate corresponds to the contraction rate $\lambda$ as defined above and may be estimated by the system in accordance with estimation parameters that may be derived by the system.

First optimisation procedure

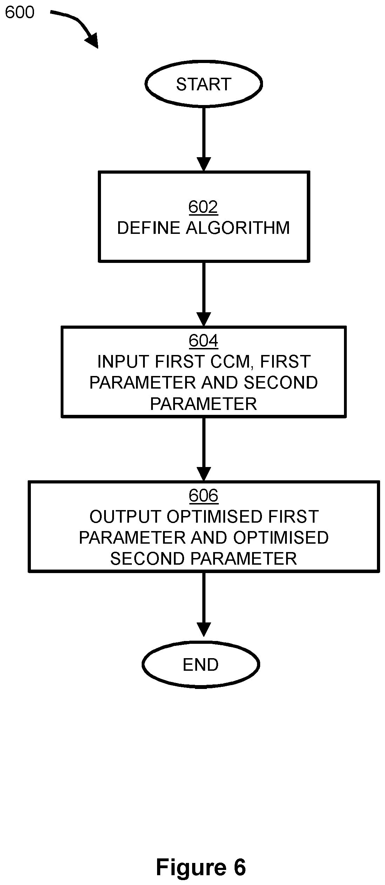

Figure 6 shows, by way of example, a flowchart of a method according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

Figure 6 shows an example of a first optimisation procedure 600.

The first optimisation procedure 600 comprises a first operation 602 of defining an algorithm for performing the first optimisation procedure.

The first optimisation procedure 600 comprises a second operation 604 of inputting the first CCM, the first parameter and the second parameter into the algorithm.

The first optimisation procedure 600 comprises a third operation 606 of outputting, from the algorithm, the optimised first parameter and the optimised second parameter.

In the first optimisation procedure, the algorithm may correspond to a CCM linear approximation for the dynamics and control effectiveness matrix. As such, the first operation 602 of defining the algorithm may comprise referring to the above reference mathematical approach to CCMs and the example algorithm presented below. At the second operation 604, first CCM metric alongside, the first parameter and second parameter are input into the algorithm. The first CCM metric may correspond to an estimated contraction rate of the system as previously discussed. The estimated contraction rate may be chosen based on second order flying qualities. Subsequently, the third operation 606 is completed and the optimised first parameter and optimised second parameter are output from the system. These optimised first and second parameters will now be defined and not interfered with by the second optimisation procedure.

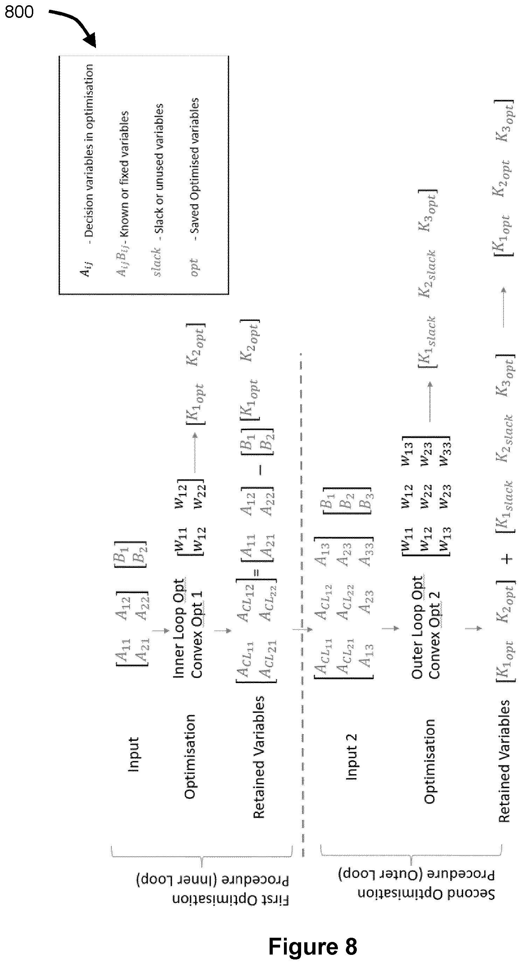

The first optimisation procedure is also shown in Figure 8 by way of a matrix demonstration. The first and second parameters are denoted by the $A_{i,j}$ terminology and the first CCM is denoted by $w_{i,j}$. The first optimised parameter is denoted by $K_{1opt}$ and the second optimised parameter is denoted by $K_{2opt}$.

Second optimisation procedure

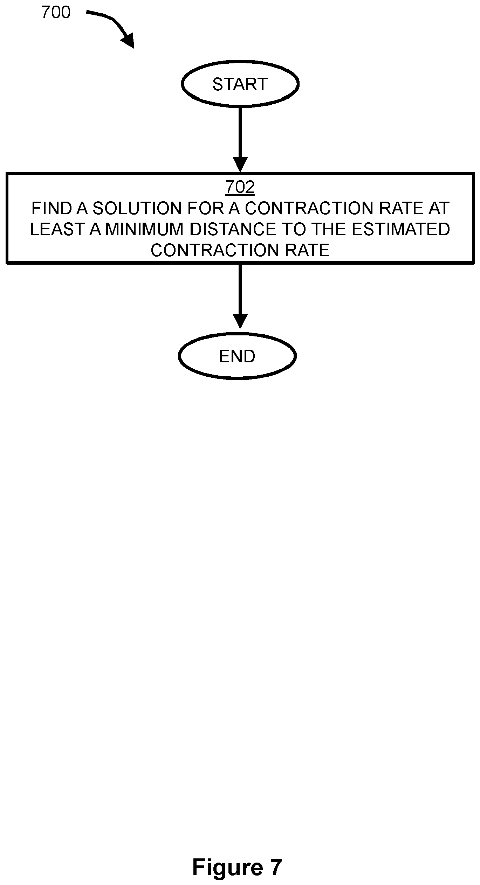

Figure 7 shows, by way of example, a flowchart of a method according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

Figure 7 shows an example of a second optimisation procedure 700. The second optimisation procedure 700 comprises an operation 702 of optimising the first parameter, the second parameter and the third parameter to find a solution for a contraction rate at least a minimum distance to the estimated contraction rate. The second optimisation procedure 700 works by searching for a second CCM dual metric $W$ as a convex Semi-Definite Programme (SDP) and optimising the decision variables to find a solution for the contraction rate a minimum distance to the estimated contraction rate.

The second optimisation procedure is also known in shown Figure 8 by way of a matrix demonstration. The third parameter is denoted by the $A_{i,j}$ terminology alongside the first and second parameters. The second CCM is denoted by $w_{i,j}$ alongside the first CCM. The third optimised parameter is denoted by $K_{3opt}$.

Producing final solution

To complete the double-loop optimisation procedure the results of the first optimisation procedure and the second optimisation procedure must be combined in a final solution. The final solution is produced by combining the first optimised parameter, the second optimised parameter and the third optimised parameter. As such the second loop gains are then combined with the saved first loop gains to create the final controller solution. This is demonstrated in Figure 8, where the matrices of first optimised parameter, $K_{1opt}$, and the second optimised parameter, $K_{2opt}$ and third optimised parameter is denoted by $K_{3opt}$

The final solution may be used to control the system (e.g. aircraft). In this way a correction to a path of flight may be made after an error is detected with the aircraft.

Example algorithm

An example algorithm is herein defined for the dual loop optimisation. Let $W$ be a positive definite symmetric matrix with components $w_{11}$, $w_{12}$, and $w_{22}$, let $M$ be the inverse of $W$, and let $\lambda$ be the product of the damping ratio $\zeta_d$ and the natural frequency $\omega_{nd}$. The objective of the optimization problem is to maximise the sum of $w_{11}$ and $w_{22}$, subject to the constraints that $W$ is positive semi-definite, $AW + WA^T - BB^T + 2\lambda W$ is negative semi-definite, and the eigenvalues values of $M$ are bounded by $1/\overline{\beta}$ and $1/\underline{\beta}$. The optimization problem is formulated as follows:

$$\min_{w_{11} w_{22} \in \mathbb{R} > 0} (w_{11} - w_{22}) \tag{9}$$

$$s.t. \quad W \geq 0 \tag{10}$$

$$\lambda = \zeta_d \omega n_d \tag{11}$$

$$-(AW + WA^T - BB^T + 2\lambda W) \geq 0 \tag{12}$$

$$W = \begin{bmatrix} w_{11} & w_{12} \\ w_{12} & w_{22} \end{bmatrix} \tag{13}$$

$$M = W^{-1} \tag{14}$$

$$\underline{\sigma}(M) = \frac{1}{\overline{\beta}}(W), \quad \overline{\sigma}(M) = \frac{1}{\underline{\beta}}(W) \tag{15}$$

Furthermore, an example algorithm for performing the dual loop optimisation is provided below. The decay rate $\lambda$ referred to in the example algorithm is equivalent to the contraction rate $\lambda$ discussed throughout the description. The example algorithm shows the dual loop approach to optimisation.

**41** **Input:** $A_{inner}$ and $B_{inner}$ matrix coefficients of the learned dynamics for the inner loop.

**42** $\lambda \leftarrow \zeta_d \omega_{n_d}$ Set the decay rate to design condition

**43** **for** $\zeta_{d_i} \omega_{n_{d_i}}$ **do**

**44**     **if** $(W_{feas} == true)$ **then**

**45**        $W \leftarrow \{w_{11}, w_{12}, w_{22}\}$    $\leftarrow \mathbf{CCM}_{InnerLoop}$

**46**        $\omega_{n_i} \leftarrow \omega_n(W, A, B)$

**47**        **if** $\omega_{n_{min}} \le \omega_{n_i} \le \omega_{n_{max}}$ **then**

**48**           $K_{OPT_{inner}} = 0.5 B^T (W)^{-1}$

**49**           $A_{CL_{inner}} \leftarrow (A_{inner} - B_{inner} K_{OPT_{inner}})$

**50**        **continue**

**51**     **else**

**52**        $\lambda \leftarrow \zeta_{d_{i+1}} \omega_{n_{d_{i+1}}}$

**53** **Input:** $A_{closed\text{-}loop_{inner}}$, $A_{outer}$ and $B_{outer}$

**54** $A_{outer} \leftarrow A_{CL_{inner}}$

**55** **for** $i = 1 : 50$ **do**

**56**     $\Delta\lambda = i \times 0.05$

**57**     $\lambda = 0.1 + \Delta\lambda$

**58**     $W \leftarrow \{w_{13}, w_{23}, w_{33}\}$    $\leftarrow \mathbf{CCM}_{OuterLoop}$

**59**     **if** $(W_{feas} == true)$ **then**

**60**        $M = W^{-1}$

**61**        $ratio \leftarrow \lambda / (\zeta_d \omega_{n_d})$

**62**     **else**

**63**        $M \leftarrow \mathbb{I}_2$

**64**        $ratio \leftarrow 0$

**65**        **continue**

**66** **Output:** $W$ for $\min |ratio - 1|$

**67** $K_{OPT_{outer}} = 0.5 B^T (W)^{-1}$

**68** $K_{OPT_{outer}} \leftarrow K_{OPT_{inner}}$

**69** **Output:** $K_{OPT_{outer}}$

<u>Example apparatus</u>

The method discussed herein may be performed by a flight controller. The flight controller may be located externally or internally to an aircraft. The flight controller may comprise at least one processor; and at least one memory storing instructions that, when executed by the at least one processor, cause the performance of the apparatus.

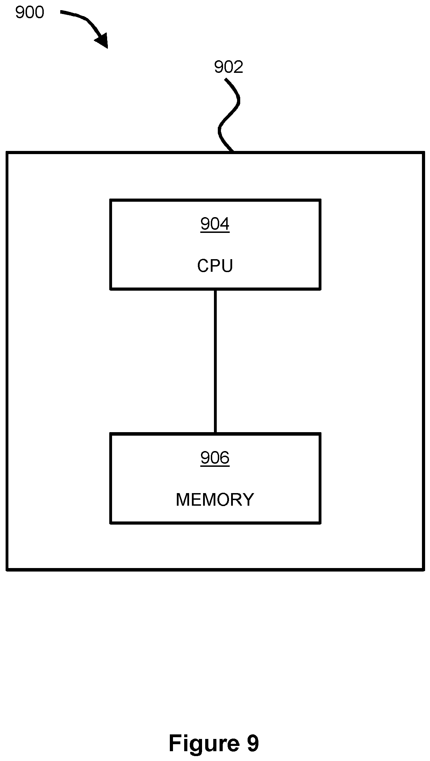

Figure 9 shows an apparatus 900 according to some example embodiments. The apparatus 900 may be configured to perform the operations described herein, for example operations described with reference to any disclosed process. The apparatus comprises at least one CPU including a processor 904 and at least one memory 906 directly or closely connected to the processor. The memory 906 includes at least one random access memory (RAM) and at least one read-only memory (ROM). Computer program code (software) is stored in the ROM. The apparatus may, optionally, be connected with a user interface (UI) for instructing the apparatus and/or for outputting data. The at least one processor 904, with the at least one memory 906 and the computer program code are arranged to cause the apparatus to at least perform at least the method according to any preceding process, for example as disclosed in relation to the flow diagrams of Figures 1, 6 and 7 and related features thereof.

The memory 906 may be volatile or non-volatile. It may be e.g. a RAM, a SRAM, a flash memory, a FPGA block ram, a DCD, a CD, a USB stick, and a blue ray disk.

A non-transitory media may also be provided according to some embodiments. The non-transitory media is a computer readable storage medium. It may be e.g. a CD, a DVD, a USB stick, a blue ray disk, etc. The non-transitory media stores computer program code, causing an apparatus to perform the method of any preceding process for example as disclosed in relation to the flow diagrams and related features thereof.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above-described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

**Claims**

1. A method for controlling a system, comprising:

   obtaining a set of parameters for the system, wherein the set of parameters comprising at least a first parameter, a second parameter and a third parameter and the set of parameters relate to features of the system suitable for controlling;

   performing a first optimisation procedure using the first parameter and second parameter to determine an optimised first parameter and optimised second parameter, wherein the first optimisation procedure comprises defining a first control contraction metric (CCM) for the system;
   performing a second optimisation procedure using the first parameter, second parameter and third parameter, to determine an optimised third parameter, wherein the second optimisation procedure comprises defining a second CCM metric for the system;
   combining the optimised first parameter, optimised second parameter and optimised third parameter to produce a final solution for controlling the system.

2. The method of claim 1, further comprising controlling the system based on the final solution for controlling the system.

3. The method of any preceding claim, wherein the first CMM comprises an estimated contraction rate of the system.

4. The method of any preceding claim, wherein performing the first optimisation procedure comprises:

   defining an algorithm for performing the first optimisation procedure;
   inputting the first CCM, the first parameter and the second parameter into the algorithm;
   outputting, from the algorithm, the optimised first parameter and the optimised second parameter.

5. The method of any preceding claim, wherein the second CMM comprises a dual metric, W.

6. The method of any preceding claim, wherein performing the second optimisation procedure comprises optimising the first parameter, the second parameter and the third parameter to find a solution for a contraction rate at least a minimum distance to the estimated contraction rate.

7. The method of any preceding claim, wherein the method comprises a method of flying quality control for a controller of an aircraft.

8. The method of claim 7, wherein the aircraft comprises an unmanned ariel vehicle, UAV.

9. The method of claims 7 or 8, wherein the aircraft comprises a fighter jet.

10. The method of any of claims 7 to 9, wherein the first parameter or second parameter comprise one of the following:

    an angle of attack, $\alpha$, of the aircraft, wherein the angle of attack $\alpha$ represents an angle of the body the aircraft relative to a wind axis;
a pitch rate, q, of the aircraft, wherein pitch rate q represents a rate of change of a pitch attitude $\theta$ of the aircraft.

11. The method of any of claims 7 to 10, wherein the third parameter comprises: a pitch attitude $\theta$ of the aircraft, wherein the pitch attitude $\theta$ represents a pitch of
the aircraft relative to a ground level.

12. The method of any of claims 3 to 11, wherein the estimated contraction rate of the system is based on a second order flying quality.

13. A flight controller, comprising means for performing the method of any preceding claim.

14. The flight controller according claim 14, wherein the means comprise: at least one processor; and at least one memory storing instructions that, when executed by the at least one processor, cause the performance of the apparatus.

15. A computer program comprising computer readable instructions which when executed by a computer are arranged to implement the method according to any one of claims 1 to 13.

100

```
        ┌───────────┐
        │   START   │
        └───────────┘
              │
              ▼
   ┌─────────────────────┐
   │         102         │
   │    OBTAIN SET OF     │
   │     PARAMETERS       │
   └─────────────────────┘
              │
              ▼
   ┌─────────────────────┐
   │         104         │
   │   PERFORM FIRST      │
   │    OPTIMISATION      │
   │    PROCEDURE         │
   └─────────────────────┘
              │
              ▼
   ┌─────────────────────┐
   │         106         │
   │   PERFORM SECOND     │
   │    OPTIMISATION      │
   │    PROCEDURE         │
   └─────────────────────┘
              │
              ▼
   ┌─────────────────────┐
   │         108         │
   │ PRODUCE FINAL SOLUTION│
   │  FOR CONTROLLING A    │
   │      SYSTEM           │
   └─────────────────────┘
              │
              ▼
        ┌───────────┐
        │    END    │
        └───────────┘
```

**Figure 1**

200

**Figure 2**

**Figure 3**

**Figure 4**

Figure 5

600

START

602
DEFINE ALGORITHM

604
INPUT FIRST CCM, FIRST
PARAMETER AND SECOND
PARAMETER

606
OUTPUT OPTIMISED FIRST
PARAMETER AND OPTIMISED
SECOND PARAMETER

END

**Figure 6**

700

START

702
FIND A SOLUTION FOR A CONTRACTION RATE AT
LEAST A MINIMUM DISTANCE TO THE ESTIMATED
CONTRACTION RATE

END

**Figure 7**

800

$A_{ij}$   - Decision variables in optimisation

$A_{ij}, B_{ij}$ - Known or fixed variables

$slack$ - Slack or unused variables

$opt$   - Saved Optimised variables

**First Optimisation Procedure (Inner Loop)**

Input

$$\begin{bmatrix} A_{11} & A_{12} \\ A_{21} & A_{22} \end{bmatrix} \quad \begin{bmatrix} B_1 \\ B_2 \end{bmatrix}$$

Optimisation: Inner Loop Opt Convex Opt 1

$$\begin{bmatrix} w_{11} & w_{12} \\ w_{12} & w_{22} \end{bmatrix} \longrightarrow [K_{1opt} \quad K_{2opt}]$$

Retained Variables

$$\begin{bmatrix} ACL_{11} & ACL_{12} \\ ACL_{21} & ACL_{22} \end{bmatrix} = \begin{bmatrix} A_{11} & A_{12} \\ A_{21} & A_{22} \end{bmatrix} - \begin{bmatrix} B_1 \\ B_2 \end{bmatrix} [K_{1opt} \quad K_{2opt}]$$

**Second Optimisation Procedure (Outer Loop)**

Input 2

$$\begin{bmatrix} ACL_{11} & ACL_{12} & A_{13} \\ ACL_{21} & ACL_{22} & A_{23} \\ A_{13} & A_{23} & A_{33} \end{bmatrix} \quad \begin{bmatrix} B_1 \\ B_2 \\ B_3 \end{bmatrix}$$

Optimisation: Outer Loop Opt Convex Opt 2

$$\begin{bmatrix} w_{11} & w_{12} & w_{13} \\ w_{12} & w_{22} & w_{23} \\ w_{13} & w_{23} & w_{33} \end{bmatrix} \longrightarrow [K_{1slack} \quad K_{2slack} \quad K_{3opt}]$$

Retained Variables

$$[K_{1opt} \quad K_{2opt}] + [K_{1slack} \quad K_{2slack} \quad K_{3opt}] \longrightarrow [K_{1opt} \quad K_{2opt} \quad K_{3opt}]$$

## Figure 8

900

902

904

CPU

906

MEMORY

**Figure 9**

Europäisches
Patentamt
European
Patent Office
Office européen
des brevets

# EUROPEAN SEARCH REPORT

**Application Number**

EP 23 27 5170

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QIN C ET AL: "Flight Path Optimization and Control of Morphing Cross-Domain Unmanned Vehicle for Entering Water", 2023 9TH INTERNATIONAL CONFERENCE ON CONTROL, DECISION AND INFORMATION TECHNOLOGIES (CODIT), IEEE, 3 July 2023 (2023-07-03), pages 1120-1125, XP034452876, DOI: 10.1109/CODIT58514.2023.10284198 [retrieved on 2023-10-24] * the whole document * | 1-15 | INV. B64C15/00 G05D1/00 B64C13/00 ADD. G01C23/00 G08G5/00 |
| A | PAN ZHAO ET AL: "Tube-Certified Trajectory Tracking for Nonlinear Systems With Robust Control Contraction Metrics", ARXIV.ORG, CORNELL UNIVERSITY LIBRARY, 201 OLIN LIBRARY CORNELL UNIVERSITY ITHACA, NY 14853, 19 February 2022 (2022-02-19), XP091156391, * the whole document * | 1-15 | |
| A | HIROYASU TSUKAMOTO ET AL: "Robust Controller Design for Stochastic Nonlinear Systems via Convex Optimization", ARXIV.ORG, CORNELL UNIVERSITY LIBRARY, 201 OLIN LIBRARY CORNELL UNIVERSITY ITHACA, NY 14853, 19 November 2020 (2020-11-19), XP081816483, DOI: 10.1109/TAC.2020.3038402 * the whole document * | 1-15 | TECHNICAL FIELDS SEARCHED (IPC) B64C G05D G08G G01C B64U |

The present search report has been drawn up for all claims

| Place of search | Date of completion of the search | Examiner |
|---|---|---|
| The Hague | 23 May 2024 | Itoafa, Alex |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I. R. MANCHESTER** ; **J.-J. E. SLOTINE**. *Control contraction metrics, robust control and observer duality*, 2014